# EUROPEAN PATENT SPECIFICATION

(11) **EP 0 332 475 B1**
(45) Date of publication and mention of the grant of the patent: **05.07.1995**
(21) Application number: 89302454.7
(22) Date of filing: 13.03.1989
(51) Int. Cl.: H02J 7/00

(54) **Battery charger and battery packs**
Batterielader und Batteriegehäuse
Chargeur de batterie et boîtiers pour batteries

(30) Priority: 11.03.1988 US 167063
(43) Date of publication of application: 13.09.1989
(60) Divisional application: 93104807.8
(73) Proprietor: Black & Decker Inc., Newark Delaware 19711 (US)
(72) Inventor: Gardner, Billy J., Rocky Mount, NC 27801 (US); O'Hara, Frank, Hanover, PA 17331 (US); Jelovich, Benjamin C., Tarboro, NC 27886 (US); Secoura, Ralph Alan, Timonium, MD 21093 (US)
(74) Representative: Randall, John Walter

(56) References cited:
- EP-A- 0 027 959
- EP-A- 0 027 959
- EP-A- 0 246 336
- EP-A- 0 255 568
- EP-A- 0 255 568
- EP-A- 0 255 568
- DE-B- 1 164 534
- FR-A- 2 098 918
- FR-A- 2 098 918
- FR-A- 2 320 652
- GB-A- 2 157 511
- IT-A- 548 490
- US-A- 2 579 538
- US-A- 3 755 635
- US-A- 3 982 084
- US-A- 4 371 827
- US-A- 4 371 827
- US-A- 4 558 270
- PATENT ABSTRACTS OF JAPAN, vol. 12, no. 30 (E-578)[2877], 28th January 1988;& JP-A-62 186 462 (FUJITSU LTD) 14-08-1987

## Description

This invention relates to a battery charger, to battery packs and to a terminal block for use in battery packs.

The several advantages of cordless power for tools and appliances have led to the development of a wide range of sizes of battery packs. Low powered battery packs comprising two or three cells have long been known. Much larger sizes are becoming more common and there is already a potential demand for units comprising up to say twenty cells. Preferably one battery charger should be able to handle all sizes of battery pack.

It has been conventional to use battery chargers based on a step down transformer. The inherent isolation of charger output terminals and of batteries under charge from high battery charger input voltages is an advantage. However, transformer battery chargers are essentially voltage sources and transformer size must be closely related to the number of cells to be charged. With some electronic circuitry the range of a given transformer battery charger can be extended somewhat, but this is not generally cost effective and a "universal" transformer charger, for covering a wide range of battery pack sizes, is not feasible.

The capacitive battery charger, essentially a current source, is not "cell dependent" in the way that a transformer battery charger is. Hence it has been a potential alternative or replacement for the transformer battery charger, but high capacitor cost has hindered its introduction. However, recent developments in capacitor design, notably the introduction of the metalized film capacitor, makes its use in battery charger design cost effective. But to realize the potential contribution of the capacitor to the design of a more truly universal battery charger, charger receptacle and terminal block design must preferably be made compatible with battery packs not only varying in power size but also in physical size and configuration. At the same time it must be recognized that the capacitor battery charger is inherently non-isolated so that the battery charger and battery pack terminals, and the cell terminals when under charge, are at high voltage.

Hence, it has continued to be common practice to provide a specific charger for each tool resulting in wasteful duplication. In US Patent No. 4 173 733, Sugalski suggests a combination in which one battery charger design accepts at least two configurations of holder, holding cells for charging. However, Sugaliski does not deal with battery packs per se and in his design, integrity or stability of the connection between the cell holder and battery charger depend entirely on the button and socket-type terminals connecting them, and at least before connection, the terminals on both cell holder and charger are exposed.

To adapt his battery charger to different battery packs, Busch, in German Patent DE 2 702 129, accepts the inconvenience of additional parts, providing a specific adaptor for fitting each of two styles of battery pack to the battery charger receptacle. The charger terminals remain exposed at the bottom of the charger receptacle.

Important elements in the control of a charging process are, typically a device for sensing battery temperature (often a thermistor is used), and an associated charging indicator light. Normally the temperature sensor is closely associated with one or more of the cells of the battery pack and the entire charger/tool system is burdened with the cost of providing a temperature sensor and possibly indicator light for each battery pack, as in Sugalski. In another example, Hashimoto, in German Patent DE 3 144 858 (Fig. 2), discloses a thermistor within the battery pack. His configuration requires an additional terminal on the battery pack and on the charger to electrically connect the thermistor with the charging circuit.

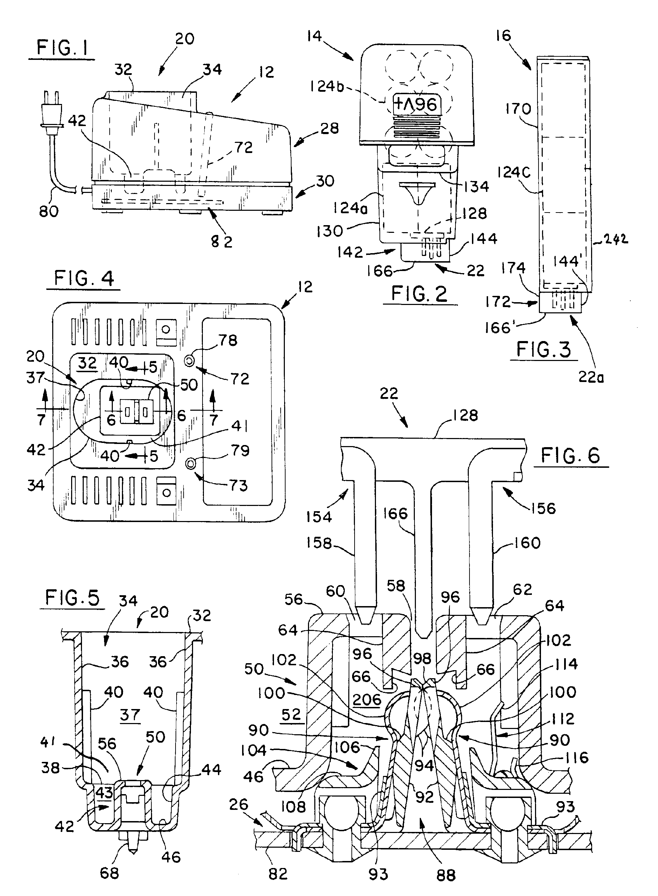

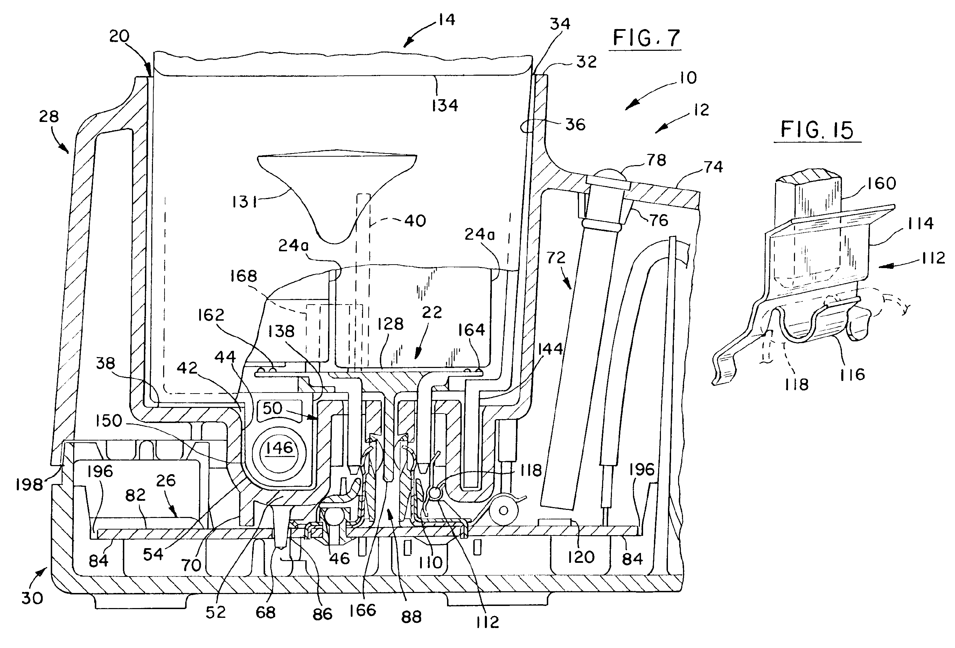

Hernandez in US Patent 4 616 171 discloses a thermistor (Fig.4a) projecting through an opening 120 in charger casing 121. Thermal contact with cells 206 of the battery pack 200 is made through opening 212 (Fig. 6). This arrangement avoids the duplication of control elements in the battery packs but has the disadvantage of requiring potentially troublesome openings in the battery charger and battery pack housings.

It is well known to provide the openings of electrical power outlets with shutters or shields which impede accidental contact with their live terminals. See for example US Patents 2 579 538 Bierce and 4 493 517 Hillary, both of which disclose safety shutter arrangements in an outlet, normally responsive only to the insertion of a conventional mating plug. However, similar provisions in battery charger/battery pack combinations are not known.

EP A 246 336 discloses a multi station charging device which comprises a number of charging outlets each of which can receive a battery powered tool to charge the battery thereof. Each charging outlet comprises a terminal assembly having a pair of terminal blades substantially enclosed in a housing the housing comprising a wall having a terminal aperture through which a terminal pin of a tool can be inserted to contact the terminal blades for charging the battery of the tool. To enable a continuous charging current to be maintained a circuit is provided which comprises two spring like terminal blades at each outlet. When no tool is present at the outlet the blades are urged into contact with each other. A single terminal aperture is provided. Each tool is provided with a single insulating pin having on opposite sides separate conducting portions. On presentation of a tool to the outlet, the single pin of the tool is forced between the terminal blades, thus completing the charging circuit through the battery of the tool. Such an arrangement necessarily allows for accidental access to the blades when no tool is present which, as the blades are carrying the charging current, is potentially hazardous.

The present invention provides a battery charger comprising a terminal assembly having a pair of terminal blades substantially enclosed in a housing the housing comprising a wall having a terminal aperture through which a terminal pin of a battery pack can be inserted to contact the blades for charging the battery pack
characterized in that
the wall has two terminal apertures through each of which a terminal pin may be inserted to contact a terminal blade and a further aperture adapted to receive an actuator of a battery pack,
the housing includes a receptacle for receiving, engaging and supporting the battery pack, the receptacle having side walls terminating in a floor at the bottom of the receptacle and the floor (38) surrounding the wall and the apertures
and insertion of an actuator through the aperture permits the terminal pins on the battery pack to be inserted through the terminal apertures to contact the terminal blades.

The actuator may urge the terminal blades into contact with the terminal pins or may simply displace a shield enabling said terminal pins to contact said terminal blades.

Preferably, the battery charger comprises displaceable means for displacing said terminal blades.

Advantageously, the displaceable means includes cam means engeable by said actuator, and responsive to such engagement to effect engagement of said terminal blades and said terminal pins.

Preferably, the cam means include two arms cantilevered within said charger terminal assembly and each arm having a free end and a cam disposed adjacent said free end, said cams facing each other and overlapping at a common centre line when said actuator is not inserted therebetween.

Preferably in the battery charger the receptacle floor includes a terminal assembly pedestal spaced from the side walls of the receptacle so that a moat-like space surrounds the terminal assembly pedestal, the terminal assembly pedestal having a substantially planar top wall containing the apertures.

The present invention provides in another of its aspects a battery pack for use with a battery charger in accordance with the invention, characterized in that said battery pack comprises a terminal block which includes a base carrying a pair of spaced apart terminal pins the base including an actuator comprising an elongated insulating member which extends between the terminal pins the actuator and the terminal pins being generally parallel and extending in a first direction when the battery pack is inserted into the battery charger.

Preferably, the elongated insulating member extends beyond the terminal pins in the first direction.

Advantageously, the terminal pins and the elongated insulating member are surrounded by a shroud, said shroud extending beyond the terminal pins in the first direction, and the elongated insulating member substantially spanning the width of the shroud between the terminal pins so that each terminal pin is substantially shielded from inadvertent external or short circuiting contact.

Preferably, when the battery pack is inserted in the receptacle of the battery charger assembly said shroud enters the moat-like space of the respectable and axially overlaps the terminal assembly pedestal.

For a better understanding of the present invention reference will now be made, by way of example, to the accompanying drawings, in which:-
Fig. 1 is a side view of a battery charger in accordance with the invention;
Figs. 2 and 3 are respectively side views of first and second embodiments of battery packs rechargeable by the battery charger of Fig. 1;
Fig. 4 is a somewhat enlarged overhead view of the battery charger of Fig. 1;
Fig. 5 is an enlarged cross-section taken approximately on line 5-5 of Fig. 4 showing details of the battery pack receiving receptacle of the battery charger;
Fig. 6 is a much enlarged partial cross-section of the battery charger taken approximately on line 6-6 of Fig. 4, showing details of the charger terminal assembly and also a portion of the terminal block of a battery pack in position for connection with the battery charger;
Fig. 7 is an enlarged cross-section of the battery charger taken approximately on line 7-7 of Fig. 4 with a battery pack connected and in a charging relationship;
Fig. 8 is an end view of the battery pack of Fig. 2;
Fig. 9 is a perspective view of the battery pack of Fig. 2 as viewed from below;
Figs. 10 and 11 are bottom views showing the terminal block arrangement of the battery packs of Figs. 2 and 3 respectively. In Figure 11 the relative position of the charger receptacle walls is shown in phantom outline;
Figs. 12a-e show bottom views of the terminal block assemblies of battery packs of the first embodiment in two, three and eight cell sizes (12a through c respectively) and of the second embodiment in two and three cell sizes (12d, 12e) to show a sample of the key lockout pattern used to limit the battery packs to connection only with compatible tools;
Fig. 13 is a side view similar to Fig. 3 of a third embodiment of battery pack;
Fig. 14 is an enlarged pictorial view of the terminal block of the battery pack of Fig. 2;
Fig. 15 is an enlarged pictorial view of the thermistor mounting clip of the battery charger in contact with a terminal pin of a battery pack;
Fig. 16 is an enlarged end view similar to Fig. 8 of the battery pack of Fig. 2, but cut away to show details of the battery cell subassembly;
Fig. 17 is an enlarged view taken approximately on line 17-17 of Fig. 16 showing further details of the battery cell subassembly;
Fig. 18 is a view similar to Fig. 17 but taken from the opposite side of the battery pack, approximately on line 18-18 of Fig. 16; and
Fig. 19 is a cut away view similar to Fig. 18 of the battery pack of Fig. 3. It indicates the cell connection arrangement of a battery pack of two or more cells.

Referring to Figs. 1, 4 to 7 and 15, there is shown a battery charger 12 which comprises an upper housing portion 28 provided with a receptacle 20 for receiving a battery pack. The receptacle 20 extends deeply into the battery charger 12 from a battery pack supporting platform 32 which substantially surrounds it. The receptacle 20 comprises a primary chamber 34 which is of generally oval cross-section (as seen best in Fig. 4) and which has side walls 36 which terminate in a generally horizontal floor 38. A pair of locating ribs 40 extend from the floor 38 to about two thirds the height of the side walls 36 and help to define a terminal end portion 41 of the receptacle 20. The floor 38 opens downwards into a secondary chamber 42, the generally rectangular form of which is seen best in Fig. 4. The secondary chamber 42 is provided with side walls 44 which descend to a floor 46.

A terminal assembly pedestal 50 extends upwards from the floor 46 and protrudes into the primary chamber 34. Its generally rectangular shape in plan and its asymmetrical disposition in the secondary chamber 42 are also best seen in Fig. 4. The space of the secondary chamber 42 remaining between the terminal assembly pedestal 50 and the side walls 44 of the secondary chamber 42 is moat-like in form and at its widest point 52 the side walls 44 meet the floor 46 at a generously radiused corner 54 (Fig. 7).

The top wall 56 of the terminal assembly pedestal 50 is penetrated by three apertures which are symmetrically placed and which include a longer, central, insulator aperture 58, flanked by terminal apertures 60 and 62 (see Fig. 6), Descending partway within the terminal assembly pedestal 50 from its top wall 56 are a pair of shielding walls 64, which also define the lateral sides of the insulator aperture 58. At its lower end, each shielding wall 64 is recessed outwards to define a pair of lips 66.

Internal features of the upper housing portion 28, best seen in Fig. 7, include a tapered pin 68 which extends downwards from the floor 46. A leg 70 alongside the tapered pin 68 descends only about half the length of the tapered pin 68.

A pair of optic tubes 72, 73 extend downwards from sloping wall 74 of the upper housing portion 28. Each optic tube 72, 73 is connected to the sloping wall 74 by a "snap-latch" retaining arrangement 76. The lens like ends 78, 79 of the optic tubes 72, 73 are approximately flush with the surface of the sloping wall 74 (Figs. 4 and 7).

A printed circuit board 82 carries much of the electrical circuitry of the battery charger 12 and external power is brought to it through a power cord 80. The printed circuit board 82 is supported in the lower housing portion 30 by support surfaces 84 shown in Fig. 7. On initial assembly into the lower housing portion 30, the printed circuit board 82 is free to float or be adjusted in a horizontal plane relative to the lower housing portion 30. In assembly, a locating hole 86 in the printed circuit board 82 registers with and is penetrated by the tapered pin 68 of the upper housing portion 28.

A charger terminal assembly 88 carried by the printed circuit board 82 extends upwards into the centre of the terminal assembly pedestal 50 (see Fig. 6). It includes a pair of terminal blades 90 each associated with a spring terminal support 92 and both cantilevered from the printed circuit board 82 and biased toward each other into the centre (disconnected) position shown in Fig. 6. Bias is augmented by leaf springs 93. Towards their upper ends 96 the spring terminal supports 92 bear a series of cam lobes 94 spaced so that when the spring terminal supports 92 meet the cam lobes 94 interleave on the common centre line of terminal block 22 (especially insulating wall 166) and charger terminal assembly 88, as shown in Fig. 6. The upper ends 96 of the spring terminal supports 92 are shaped so as to define an upwardly opening curved V or cam entry 98. Operative contact between the terminal blades 90 and their spring terminal supports 92 is only at a fulcrum 100 raised on the face of the spring terminal supports 92. The spring terminal supports 92 are recessed above this point to provide clearance for the somewhat hook-like upper ends 102 of the terminal blades 90. Symmetrically straddling the charger terminal assembly 88 is a pair of deflector ramps 104, each having an upper tip 106 adjacent and somewhat below the upper ends 102 of the terminal blades 90 and a lower portion 108, extending outwards close to the level of the floor 46 of the secondary chamber 42 of the receptacle 20.

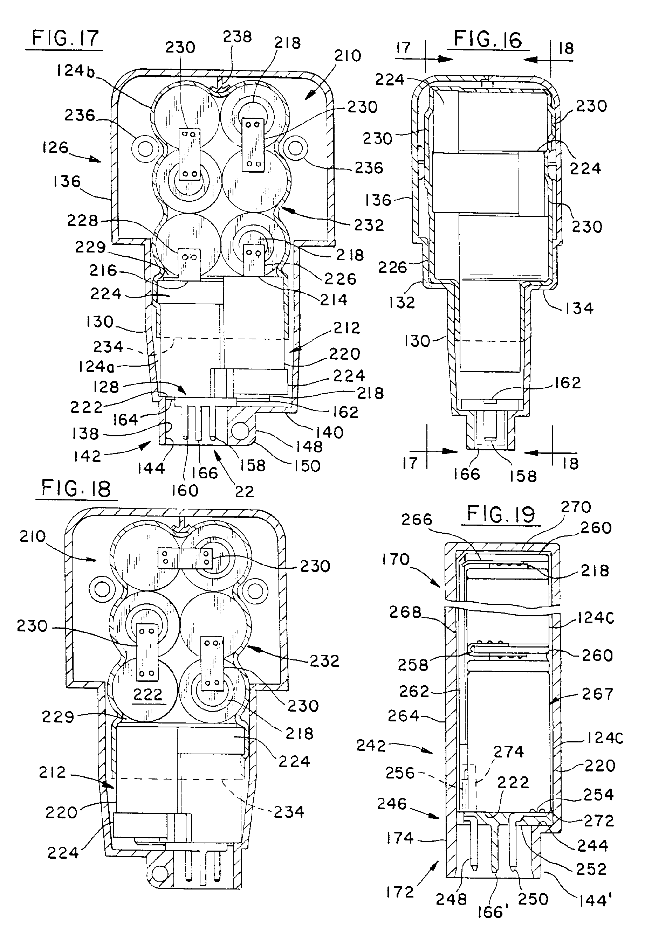

Adjacent one of the terminal blades 90, an upright recess 110 in the charger terminal assembly 88 accommodates a thermistor clip 112, so that it stands erect approximately parallel to the terminal blades 90, as seen best in Figs. 7 and 15. An upper contact portion 114 of the thermistor clip 112 is approximately horizontally opposite the hook-like upper ends 102 of the adjacent terminal blade. Closely below the upper contact portion 114 of the thermistor clip 112, a resilient cradle 116 supports a thermistor 118. The printed circuit board 82 also carries a pair of light emitting diodes 120, 121 (121 not shown) disposed on the upper side of the printed circuit board 82 so that, on assembly, they register with the lower ends of the optic tubes 72, 73. Light emitting diode 120 is green, 121 is red.

Figures 2, 8, 9, 10 and 16-18, show a "standard" battery pack 14 which contains a plurality of cells 124 in a housing 126, preferably of a suitable substantially rigid plastics material. The cells 124 comprise a pair of upright cells 124a arranged side-by-side in the lower or nose portion 130 of the "standard" battery pack 14, with the base 128 of terminal block 22 below them, and transverse cells 124b stacked transversely in pairs above them. The "standard" battery pack shown has eight cells 124. Advantages of this cell arrangement configuration are compactness and its suitability for a range of battery pack sizes, (say from four cells to twenty cells) and facilitating the manufacture of an electrically connected subassembly 210 of cells in preparation for its insertion into the housing 126. (This subassembly 210 is discusses in more detail below.) A particular form of the "standard" battery pack (not shown in the drawings) may include only the two upright cells 124a.

In the typical "standard" battery pack, such as the eight cell size shown here, the housing 126 has three main sections viz: the nose portion 130, a middle portion 132 and an enlarged portion 136.

The nose portion 130 is of connected double cylindrical form in cross-section (see Figs. 9 and 10), conforming quite closely to the "envelope" of the two upright cells 124a. This portion may carry a pawl 131 for retaining the battery pack 14 in the receptacle of a power tool or appliance.

The middle portion 132 of the housing 126 is somewhat wider, in part to accommodate of the transverse cells 124b and also to provide a horizontal ledge 134, which contributes to the support of the "standard" battery pack 14 in the battery charger 12.

The enlarged portion 136 accommodates the bulk of the transverse cells 124b.

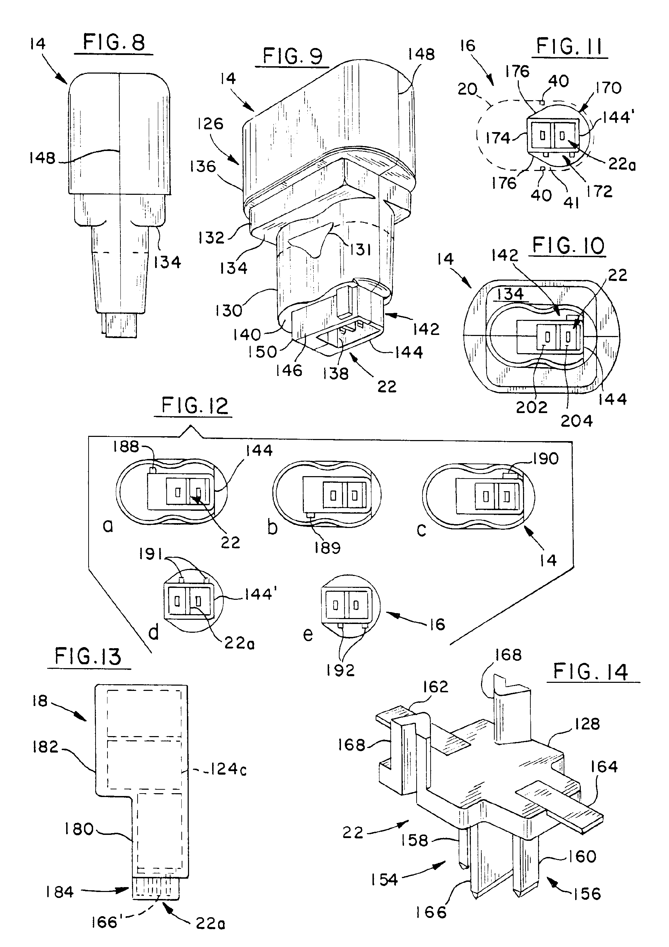

An off-centre opening 138 in the housing base 140 is protected by a downwardly extending shroud 142 consisting of a straight wall 144 on three of its sides and a thickened lobe 146 on the forth. The presence of this lobe 146 reinforces the housing 126 at this potentially vulnerable point; may accommodate a fastener for "locking" the housing if it is made in two halves split on a vertical plane (such as that indicated at 148 in Figs. 8 and 9); and its radiused corner 150 may assist in guiding the "standard" battery pack 14 into final seating in the receptacle 20 of the battery charger 12.

The terminal block 22 consists of a base 128 of plastics material, into which are moulded (best seen in Figs. 6, 7 and 14) metal terminals 154, 156, the terminal pins 158, 160 of which extend downwards but remain within the shroud 142. Each metal terminal 154, 156 includes a connecting tab 162, 164 respectively, for making electrical connection with the respective upright cells 124a. The terminal block 22 and the cells 124 of the battery pack 14 thus form a subassembly 212 (to be described in more detail below) when electrically connected for insertion as a unit into the housing 126 of the "standard" battery pack 14.

Integral with the base 128 is an insulating wall 166, extending downwards and centrally placed between the terminal pins 158, 160. The height of the insulating wall 166 exceeds the length of the terminal pins 158, 160. Its width substantially fills the transverse width of the opening 138, so that the terminal pins 158, 160 are effectively screened one from the other. Extending upwards from the base 128 are a pair of V-guides 168 which help to locate the upright cells 124a relative to the terminal block 22. The offset location of the terminal block 22 results in the V-guides 168 being almost in line with the terminal pin 158.

The "stick" battery pack 16 (Figs. 3, 11 and 13) is advantageous for packs of a smaller total number of cells and for tool environments, for example, where the simple elongated cylindrical form of Fig. 3 is desirable; or where the more compact but essentially flat form of Fig. 13 is appropriate. Pack size of two to four cells is the most useful range for the "stick" battery pack.

In the "stick" battery pack 16 of Fig. 3 the housing 170 is of modified circular cross-section as best seen in Fig. 11, and accommodates three cells, 124c arranged end to end. This battery pack 16 preferably uses a terminal block 22a outwardly similar to the "standard" battery pack 14 and shielded in a similar way with a shroud 172. This is identical with the shroud 142 of the "standard" battery pack except that the thickened lobe 146 is absent, so that a straight wall 144′ of uniform thickness extends on all four sides. As seen best in Fig. 11 the modification of the cylindrical form of the housing 170 consists of extending it to coincide with the outer face 174 of the shroud 172 and completing the form with tangential surfaces 176.

In the L-shaped "stick" battery pack 18 of Fig. 13, the three cells 124c lie with their longitudinal axes in a common plane. The lower portion 180 of the housing 182 is identical with that of the "stick" battery pack of Fig. 3, including the disposition of the terminal block 22a, with respect to the immediately adjacent lower of the cells 124c, and the shroud 184.

Figs. 12a through 12e show examples of the "key lockout" system used to standardize the shrouded terminal arrangement of the battery packs according to the number of cells, whether in "standard" or "stick" battery pack configuration - so as to avoid mismatch between battery pack and tool. The determining feature is a land 188, 189, 190 for standard battery packs of two, three and eight cell sizes. Figures 12d and e show respectively the disposition of lands 191 and 192 for the two and three cell "stick" battery pack.

Details of a "standard" battery pack subassembly 210, for an eight cell pack of cells 124 are seen best in Figs. 16-18. This assembly begins with a preliminary subassembly 212 consisting of the two upright cells 124a, the terminal block 22 and connecting straps 214, 216. The cells 124 (124a, 124b) are preferably nickel-cadmium cells of conventional construction having a central positive electrode 218, a cylindrical casing 220 and a negative electrode 222 at the opposite end. Each cell 124 in the "standard" battery pack subassembly 210 is fitted with an insulating cap 224, as protection from inadvertent short circuiting between the positive electrode 218 and an edge of the cylindrical casing 220. The insulating caps 224 of neighbouring cells 224 also act as insulating spacers to keep the cells 224 parallel and maintain separation between cylindrical casings 220 as may be seen in Figs. 16-18.

In the preliminary subassembly 212 of the upright cells 124a, the base 128 abuts the ends of the cells 124a (see Fig. 17 for example) and the connecting tabs 162, 164 are connected directly to the positive and negative electrodes 218, 222 by a suitable method such as electrical resistance welding. This virtual integration of the terminal block 22 with the cell subassembly has structural advantages and eliminates the need for wiring and simplifies assembly. The configuration of battery packs (shown in Figures 3 and 13) benefits from a similar close juxtaposition of terminal block 22a and cell end.

Preparatory to making up the complete subassembly 210 the ends of connecting straps 214, 216 are bent up at right angles to form connecting tabs 226, 228 for connecting with the two lower transverse cells 124b. The remaining four transverse cells 124b are "stacked" above these so that the juxtaposed cell ends of opposite polarity are coplanar, as seen best in Fig. 16. An insulating board 229 separates the cylindrical casings 220 of the transverse cells 124b from the upper ends of the upright cells 124a. Series connection of the transverse cells 224b is made by connecting straps 230, seen best in Figs. 17 and 18. Permanent connection of connecting straps 230 and connecting tabs 226, 228 to the cell electrodes is made by some suitable process such as electric resistance welding. As seen in the figures, all electrical connections of the transverse cells 124b of the "standard" battery pack configuration are made in a pair of spaced apart parallel planes. This simplifies such operations as setting the connecting straps 230 in position and connecting them (as by resistance welding), and facilitates automation of the assembly of the "standard" battery pack subassembly 210.

Before being encased in the housing 126, the "standard" battery pack subassembly 210 is enshrouded in a tight fitting "boot" 232. Preferably the boot 232 is of natural rubber, or as an alternative, a flexible plastic applied by a heat-shrink process may be used. In both cases the boot 232 must be tight enough and tough enough to assist materially in maintaining the structural integrity of the "standard" battery pack subassembly 210, and in supplementing the insulation of the cells afforded by the housing 126. With the boot 232 in place, inadvertent puncturing or rupturing of the housing 126 would not expose live portions of the cells to outside contact. As indicated in Figs. 16 to 18, the mouth 234 of boot 232 should reach preferably at least halfway down the upright cells 124a. The cells of the battery pack are at high voltage when the battery pack 14 is inserted in the battery charger 12 and charging and in that condition substantially the entire nose portion 130 of the housing 126 is shielded by the walls of the receptacle 20.

The "standard battery pack subassembly 210 is stabilized within the housing 126 by its relatively snug fit in the nose portion 130 and, in the enlarged portion 136, by its engagement with bosses 236 and spacer element 238, integral with the enlarged portion 136.

An eight cell battery pack has been used as an example of the "standard" battery pack configuration but the design is suitable for a wide range of sizes, twenty cells being an example of a larger size. In this, the enlarged portion would include 18 transverse cells 124b. The range of sizes may also include an odd number of cells such as eleven. In the odd sizes, a centrally placed single cell occupies the uppermost layer of the stack of transverse cells 124b (not shown in the drawings).

A "stick" battery pack 16 is shown in more detail in Fig. 19. The drawing shows the arrangement for a pack of two or more cells. The nose portion 242 of the housing 170, including the shroud 172, includes an internal shoulder 244 for positioning and retaining the terminal block 22a in the housing 170. This portion of the housing 170, including the shroud 172 and shoulder 244, may be referred to generally as the terminal end 246 of the housing 170.

The structure of the terminal block 22a is very similar to that of the "standard" battery pack described above. Positive and negative terminal pins 248, 250 respectively, are moulded into a base 252. Negative terminal connecting tab 254 connects directly (for example by electrical resistance welding) with the negative electrode 222 of the first cell 124c. Positive terminal connecting tab 256, perpendicular to the base 252, extends up alongside the cylindrical casing 220. The insulating wall 166′ separating the positive and negative terminal pins 248, 250 is integral with the base 252.

Intermediate series connection of the cells 124c is made by a folded connector strap 258 rigidly connected to the cell ends (for example as by resistance welding) with an insulator pad 260 ensuring a desired separation between the ends of neighbouring cell casings. Electrical series connection of the cell is completed by a wire lead assembly 262 connected by a slide-on connector 264 at positive terminal tab 256 and a permanently wired connection 266 at the positive electrode 218 of the top cell. This connection is also protected by an insulator pad 260 and the complete subassembly 267 of connected cells with terminal block 22a is enshrouded in a boot 268 extending from its closed end 270 at the top of the pack to an open mouth 272 encircling the bottom cell 124c, close to its end. As seen in Fig. 11 the cross-section of housing 170 is not completely round. This departure from a purely cylindrical form in part provides space for a pair of upright spaced apart guide members 274 which help to determine and maintain the rotational position of the subassembly 267 within the housing 170.

Comparison of Figs. 7, 18 and 19 shows the essential similarity between battery packs of the "standard" and "stick" type with regard to the juxtaposition of terminal blocks and a first cell of the battery pack, and also of the direct connection of the negative terminal - a compact and efficient design with the potential for savings in manufacturing cost and good reliability in service.

In the assembly of the battery charger 12, precise alignment or register between the terminal apertures 60, 62 and the insulator aperture 58 of the terminal assembly pedestal 50 with charger terminal assembly 88 is obtained through the interaction of the tapered pin 68 of the upper housing portion 28 and the locating hole 86 in the printed circuit board 82. As can be seen in Fig. 7, space 196 is provided at the support surfaces 84 of the printed circuit board 82, so that as the assembly of the upper and lower housing portion 28, 30 of the battery charger 12 is made, the housing portion fits snugly at joint 198 and the final position of the printed circuit board 26 is determined by the progressively limiting entry of the tapered pin 68 into the locating hole 86. In the manufacture of the housing upper portion 28 the horizontal disposition of the apertures 58, 60, 62 is gauged entirely with reference to the locating pin 68. In the subassembly of the printed circuit board 26, disposition of the charger terminal assembly 88 is made entirely with reference to the locating hole 86, thus ensuring the desired precision of alignment of apertures with terminal pins.

A battery pack and charger assembly system according to the invention is particularly useful when the charger is of a non-isolated type such as capacitive. In such a system the cells and the battery and charger terminals are at a high voltage during charging so that in operating the system there is the potential for electric shock, as well as shorting of the terminals of either battery pack or battery charger when they are potentially exposed before or after connection and charging.

The combination of the terminal block 22, 22a and the shroud 142, 172, 184 with its walls 144, 144′ cooperating with the insulating wall 166, 160′, so isolates and shields the respective terminal pins 158, 150 in their respective "cells" (202, 204, seen best in Fig. 10), that the possibility of inadvertently short circuiting contact between them is almost eliminated. Furthermore, as indicated above, the walls of the housing 126 and the boot 232 give the battery pack subassembly 210 two layers of protection.

Inadvertent contact with the terminal blades 90 is also very well guarded against. First of all, the charger terminal assembly 88 is protected by being at the bottom of the relatively deep receptacle 20. There, in the secondary chamber 42 of the receptacle 20, the charger terminal assembly 88 is recessed within the terminal assembly pedestal 50. To enhance this protection, the apertures 58, 60, 62 in the top wall 56 of the terminal assembly pedestal 50 are kept small. Hence the importance of the precise alignment between these apertures and the charger terminal assembly 88 referred to above.

In the "open" condition of the battery charger and particularly the charger terminal assembly 88 as shown in Fig. 6, the terminal blades 90 are retracted away from the vertical line of the terminal apertures 60, 62 under the resilient action of the terminal blades 90 (helped by leaf springs 93) and their spring terminal supports 92. The combination of this retracted position of the terminal blades 90 and the limited access provided by the terminal apertures 60, 62 severely limits the possibility of contact with a terminal blade 90, in case of inadvertent entry of a metallic object or probe through one of the apertures 60, 62. In case of entry of a metallic "probe" of sufficient length and small cross-section through one of the terminal apertures 60, 62, the shielding walls 64 would initially divert the probe from the terminal blades 90 and on further entry the probe would encounter one of the deflector ramps 104 and tend to be diverted away from the terminal blade 90. Only a small window 206 is left between the lips 66 of the shielding wall 64 and the upper tip 106 of the ramp 104, and the contact portion of the terminal blade 90 is well shielded within.

In preparation for charging operation the terminal blades 90 must be erected into the near vertical operating position shown in Fig. 7. This is accomplished by the advance entry of the insulating wall 166 in its second role as a terminal assembly actuator through the insulator aperture 58, to encounter the cam entry 98, and progressively separate the spring terminal supports 92 in a circumferential direction, so that the terminal blades 90 are moved into operating position in readiness for electrical contact with the terminal pins 158, 160. The contact pressure of the terminal blades 90 is augmented by the "leverage" about fulcrum 100.

Operation of the battery charging circuit in battery charger 12 is controlled in part by the thermistor 118. The control variable is cell temperature. Mounted on its clip 112, the thermistor 118 is in a good thermally conductive relationship with the cells 124 of the battery pack. The chain of this conductivity is from the thermistor 118 through its clip 112, and particularly the upper contact portion 114 of the thermistor clip 112, to the terminal pin 160 and through to the cells 124 of the battery pack. The thermistor clip 112 is held in the upright recess 110, in such a way that it is biased for good contact against the terminal pin 160 (see Figs. 7 and 15). The heat insulating effect of the deep receptacle 20 helps in heat transfer from cell to thermistor 118. Advantages of this simple low cost thermistor mounting include ease of assembly and isolation of the thermistor 118 from the terminal blades 90 when no battery pack is present.

The use and function of thermistors in battery charger circuits is well known although, conventionally, the thermistor is mounted in the battery pack in close association with one or more of the battery cells. Although in an unconventional location the thermistor here functions in a similar way. Electrical resistance of the thermistor varies with its temperature. The system is designed so that when, for example, the thermistor senses a temperature corresponding to a fully charged condition of the battery pack, it signals a control circuit to interrupt charging. In the preferred embodiment, the condition of the charging system is visually indicated through the medium of the light emitting diodes (LED) 120, 121 (121 not shown) carried by the printed circuit board 82. Emission of red height (LED 212, not shown) indicates that the system is charging and light from the LED is transmitted by the optic tube 73 for an external visual indication at lens like end 79. Similarly, a green light, at lens like end 78, from LED 120, indicates that charging is complete (see Figs. 4 and 7).

As has already been indicated, the system comprises a battery charger 12, which will accept a variety of battery pack configurations and of sizes or powers within those configurations. Within the context of a potentially extensive line of portable power tools or devices, the battery charger becomes universal. A basis of this universality is the innovative design of the receptacle 20. It is based on a unit of two battery cells erect and side by side. The asymmetrical disposition of the terminal assembly pedestal 50 towards one end of the floor 46 defines one end of the receptacle 20 as the terminal end and hence, in the battery pack a corresponding terminal-adjacent cell. This relationship is maintained in all battery pack configurations and sizes acceptable to the battery charger.

The contribution of the depth of the receptacle 20 to electrical safety has been referred to above. The depth and shape of the receptacle 20 also keeps such battery pack securely erect when installed in the battery charger 12. This stability is enhanced by the engagement of the horizontal ledge 134 in the housing 126 of the "standard" battery pack with the battery pack supporting platform 32 surrounding the top of the receptacle 20. Dimensions are such that this engagement limits the entry of the battery pack into the receptacle so that its weight is supported by the battery pack supporting platform 32 and the horizontal ledge 134 rather than elements at the bottom of the receptacle 20.

The "stick" pack configurations of Figs. 3 and 13 are limited in size as described above and hence are lighter and no special provision is made for vertical support of their weight. However, they are guided into and held erect in the receptacle 20 by the locating ribs 40 of the receptacle 20. (Juxtaposition shown in phantom outline in Fig. 11.)

The battery packs may be used for powering, for example electric drills, screwdrivers, circular saws, jigsaws, flashlights, string trimmers and many others from the general power tool as well as the lawn and garden tool fields and the field of small domestic appliances.

An important aspect of the preferred embodiment, the cost effective and convenient universality of the battery charger 12, derives in part from "keying" the connection of the battery charger 12 and battery pack to the unit of a single cylindrical cell, on end in the receptacle 20 and with a terminal block substantially coaxial with the cell. The receptacle 20 is elongated to accommodate at least one more cell alongside the first, and is made deep enough to provide at least auxiliary support for the portion of the battery pack housing contained in the receptacle 20. In the battery charger 12 disclosed, the receptacle 20 will accommodate battery packs with a maximum of two side-by-side cells in the charger engaging "nose" of the battery pack. Clearly, a receptacle may be extended to accept a battery pack housing three or more side-by-side cells in its nose. In such an extended version, the "prime" cell associated with the terminal block of the battery pack could still be at one end, or alternatively, the terminal block could be associated with one of the intermediate cells. In the latter case, upright ribs on the receptacle walls similar to locating ribs 40 in Figures 5 and 11 could be provided to offer auxiliary support for the battery packs needing it, such as "stick" battery packs having only one upright cell in the receptacle area. In all cases, the present battery charger/battery pack system concept combines providing substantial support for the battery pack in the battery charger (by virtue of the potential engagement of a portion of the battery pack housing in the walls of the receptacle 20 and upper supporting platform, when applicable) with a minimum limitation on the configuration of the battery pack outside the receptacle. It will be realized that the concept of charger receptacle configuration must be compatible with tool receptacles also, and that it is in association with the tool that freedom in battery pack configuration design is especially valuable.

Additionally, battery cells in portions of the battery pack outside the receptacle may be oriented to suit such requirements as compatibility of the battery pack configuration with tool shape or with a compactness requirement. For low powered tools, placing two, three or four cells end-to-end in an elongated generally cylindrical housing (a "stick" pack) may be convenient. For bigger tools and packs, holding, e.g., up to 20 cells, the cells beyond those in the receptacle may be disposed transversely of the nose cells and stacked for a compact configuration - one which facilitates manufacturing, particularly with respect to electrical connection between the various cells.

Another feature of the charger/pack system is that the battery packs have a nose portion comprising a single cell occupying only one side of the receptacle or two or more side-by-side cells, occupying more of or completely occupying the receptacle. In either case, the terminal block of the battery pack may abut a cell end, greatly facilitating the assembly operation of making electrical connection between cell and battery pack terminal pin.

All of these possible embodiments of interfacing between battery charger and battery pack would enjoy the related advantages of convenience, economy and safety. Confined to the battery charger, the charging control circuitry is potentially more reliable and the cost of duplicating it (especially the means for sensing battery temperature changes) in every battery pack is avoided. The particular shielding given the terminals of the battery charger and the terminal pins of the battery pack inherently reduces the risk of electric shock or inadvertent short circuiting and is effective when battery charger and battery pack are connected for charging as well as when they are separated. The reliability of these safety features is enhanced by the means provided to achieve accurate register in assembly between the terminal blades and their access apertures.

## Claims

1. A battery charger (12) comprising a terminal assembly (88) having a pair of terminal blades (90) substantially enclosed in a housing (28), the housing (28) comprising a wall (56) having a terminal aperture (60,62) through which a terminal pin (158, 160) of a battery pack (14, 16, 18) can be inserted to contact the blades (90) for charging the battery pack (14, 16, 18)
characterized in that
the wall (56) has two terminal apertures (60,62) through each of which a terminal pin (158, 160) may be inserted to contact a terminal blade (90) and a further aperture (58) adapted to receive an actuator (166,166′) of a battery pack,
the housing includes a receptacle (20) for receiving, engaging and supporting the battery pack, the receptacle having side walls (36) terminating in a floor (38) at the bottom of the receptacle and the floor (38) surrounding the wall (56) and the apertures (60,62,58)
and insertion of an actuator (166,166′) through the aperture (58) permits the terminal pins (158,160) on the battery pack (14,16,18) to be inserted through the terminal apertures (60, 62) to contact the terminal blades (90).

2. A battery charger according to Claim 1 characterized in that the receptacle floor (38) includes a terminal assembly pedestal (50) spaced from the side walls (36) of the receptacle (20) so that a moat-like space surrounds the terminal assembly pedestal (50) which comprises a substantially planar top wall (56) containing the apertures (60,62).

3. A battery charger according to claim 1 characterized in that insertion of the actuator displaces a shield enabling the terminal pins to contact the terminal blades.

4. A battery charger according to claim 1 characterized in that insertion of the actuator (166) urges the terminal blades (90) into contact with the terminal pins (158,160).

5. A battery charger according to Claim 4, characterized in that it comprises cam means (94) engageable by said actuator (166, 166′), and responsive to such engagement to effect engagement of said terminal blades (90) and said terminal pins (158, 160; 248, 250).

6. A battery charger according to claim 5 characterized in that said cam means (94) include two arms (92) cantilevered within said charger terminal assembly (88) and each arm (92) having a free end (98), and a cam (94) disposed adjacent said free end (98), said cams (94) facing each other and overlapping at a common centre line when said actuator (166, 166′) is not inserted therebetween.

7. A battery pack for use with a battery charger (12) according to claim 1, characterized in that said battery pack comprises a terminal block (22, 22a) which includes a base (128, 252) carrying a pair of spaced apart terminal pins (158, 160; 248, 250), the base (128, 252) including an actuator comprising an elongated insulating member (166, 166′) which extends between the terminal pins (158, 160; 248, 250) the actuator (166, 166′) and the terminal pins (158, 160, 248; 250) being generally parallel and extending in a first direction when the battery pack (14, 16, 18) is inserted into the battery charger (12).

8. A battery pack according to Claim 7 characterized in that the actuator (166, 166′) extends beyond the terminal pins (158, 160; 248, 250) in the first direction.

9. A battery pack according to claims 7 or 8 characterized in that the terminal pins (158, 160; 248, 250) and the elongated insulating member (166, 166′) are surrounded by a shroud (142) said shroud (142) extending beyond the terminal pins (158, 160; 248, 250) in the first direction, and the actuator (166, 166′) substantially spanning the width of the shroud (142) between the terminal pins (158, 160; 248,250) so that each terminal pin (158, 160; 248, 250) is substantially shielded from inadvertent external or short circuiting contact.

10. A battery pack according to claim 9 for use with a battery charger according to claim 2, characterized in that when the battery pack (14, 16, 18) is inserted in the receptacle (20) of the battery charger assembly (12) said shroud (142,174) enters the moat-like space of the receptacle (20) and axially overlaps the terminal assembly pedestal (50).

## Patentansprüche

1. Batterieladegerät (12), mit einer Anschlußanordnung (88), die ein Paar Anschlußlamellen (90) aufweist, welches im wesentlichen von einem Gehäuse (28) umgeben ist, wobei das Gehäuse (28) eine Wand (56) mit einer Anschlußöffnung (60, 62) enthält, durch welche ein Anschlußstift (158, 160) einer Batterieeinheit (14, 16, 18) eingeführt werden kann, um zum Aufladen der Batterieeinheit (14, 16, 18) mit den Lamellen (90) in Kontakt zu kommen,
**dadurch gekennzeichnet**,
daß die Wand (56) zwei Anschlußöffnungen (60, 62) enthält, durch die jeweils ein Anschlußstift (158, 160) eingeführt werden kann, um mit einer Anschlußlamelle (90) in Kontakt zu kommen, und eine weitere Öffnung (58) enthält, die ausgebildet ist, um ein Betätigungsglied (166, 166′) einer Batterieeinheit aufzunehmen,
daß das Gehäuse eine Aufnahme (20) enthält, um die Batterieeinheit aufzunehmen, mit ihr einzugreifen und sie zu halten, wobei die Aufnahme Seitenwände (36) hat, die an einer Grundebene (38) an der Unterseite der Aufnahme enden, und wobei die Grundebene (38) die Wand (56) und die Öffnungen (60, 62, 58) umgibt,
und wobei durch das Einführen eines Betätigungsgliedes (166, 166′) durch die Öffnung (58) ermöglicht wird, daß die Anschlußstifte (158, 160) an der Batterieeinheit (14, 16, 18) durch die Anschlußöffnungen (60, 62) eingeführt werden können, um mit den Anschlußlamellen (90) in Kontakt zu kommen.

2. Batterieladegerät nach Anspruch 1, **dadurch gekennzeichnet,** daß die Grundebene (38) der Aufnahme einen Anschlußanordnungs-Sockel (50) aufweist, der von den Seitenwänden (36) der Aufnahme (20) beabstandet ist, so daß ein grabenähnlichen Raum den Anschlußanordnungs-Sockel (50) umgibt, der eine im wesentlichen ebene obere Wand (56) hat, in der die Öffnungen (60, 62) enthalten sind.

3. Batterieladegerät nach Anspruch 1, **dadurch gekennzeichnet,** daß durch das Einführen des Betätigungsgliedes eine Abschirmung verlagert wird, wodurch ermöglicht wird, daß die Anschlußstifte in Kontakt mit den Anschlußlamellen kommen.

4. Batterieladegerät nach Anspruch 1, **dadurch gekennzeichnet,** daß die Anschlußlamellen (90) durch das Einführen des Betätigungsgliedes (166) in Kontakt mit den Anschlußstiften (158, 160) gedrückt werden.

5. Batterieladegerät nach Anspruch 4, **dadurch gekennzeichnet,** daß dieses Nockeneinrichtungen (94) enthält, die mit dem Betätigungsglied (166, 166′) eingreifen können und als Reaktion auf einen solchen Eingriff bewirken, daß die Anschlußlamellen (90) an den Anschlußstiften (158, 160; 248, 250) anliegen.

6. Batterieladegerät nach Anspruch 5, **dadurch gekennzeichnet,** daß die Nockeneinrichtungen (94) zwei Arme (92) aufweisen, die in der Anschlußanordnung (88) des Ladegerätes eingespannt sind, wobei jeder Arm (92) ein freies Ende (98) und einen Nocken (94) aufweist, welcher nahe dem freien Ende (98) angeordnet ist, und wobei sich die Nocken (94) gegenüberliegen und sich auf einer gemeinsamen Mittellinie überdecken, wenn das Betätigungsglied (166, 166′) nicht zwischen ihnen eingesetzt ist.

7. Batterieeinheit zur Verwendung mit einem Batterieladegerät (12) nach Anspruch 1, **dadurch gekennzeichnet,** daß die Batterieeinheit einen Anschlußblock (22, 22a) enthält, der eine Basis (128, 252) aufweist, die ein Paar beabstandet angeordnete Anschlußstifte (158, 160; 248, 250) trägt, wobei die Basis (128, 252) ein Betätigungsglied aufweist, das ein längliches Trennbauteil (166, 166′) enthält, welches sich zwischen den Anschlußstiften (158, 160; 248, 250) erstreckt, wobei das Betätigungsglied (166, 166′) und die Anschlußstifte (158, 160; 248, 250) im wesentlichen parallel verlaufen und sich in eine erste Richtung erstrecken, wenn die Batterieeinheit (14, 16, 18) in das Batterieladegerät (12) eingesetzt wird.

8. Batterieeinheit nach Anspruch 7, **dadurch gekennzeichnet,** daß sich das Betätigungsglied (166, 166′) in der ersten Richtung bis unter die Anschlußstifte (158, 160; 248, 250) erstreckt.

9. Batterieeinheit nach Anspruch 7 oder 8, **dadurch gekennzeichnet,** daß die Anschlußstifte (158, 160; 248, 250) und das längliche Trennbauteil (160, 166′) von einem Rand (142) umgeben sind, wobei sich der Rand (142) in der ersten Richtung bis unter die Anschlußstifte (158, 160; 248, 250) erstreckt, und wobei sich das Betätigungsglied (166, 166′) zwischen den Anschlußstiften (158, 160; 248, 150) im wesentlichen über die Breite des Randes (142) erstreckt, so daß jeder Anschlußstift (158, 160; 248, 250) im wesentlichen gegen einen unbeabsichtigten Außen- oder Überbrückungskontakt geschützt ist.

10. Batterieeinheit nach Anspruch 9 zur Verwendung mit einem Batterieladegerät nach Anspruch 2, **dadurch gekennzeichnet,** daß sich der Rand (142, 174) beim Einsetzen der Batterieeinheit (14, 16, 18) in die Aufnahme (20) der Batterieladeanordnung (12) in den grabenähnlichen Raum der Aufnahme (20) einfügt und den Anschlußanordnungs-Sockel (50) axial überlappt.

## Revendications

1. Chargeur de batterie (12), comprenant un assemblage à bornes (88) ayant une paire de lames de borne (90) pratiquement encloses dans un boîtier (28), le boîtier (28) comprenant une paroi (56) comportant une ouverture à borne (60, 62), à travers laquelle une broche de borne (158, 160) d'un jeu de batteries (14, 16, 18) peut être inséré pour venir en contact avec les lames (90) en vue de charger le jeu de batteries (14, 16, 18),
caractérisé en ce que :
la paroi (56) comporte deux ouvertures à borne (60, 62) à travers chacune desquelles une broche de borne (158, 160) peut être insérée pour venir en contact avec une lame de borne (90) et comporte une ouverture (58) supplémentaire adaptée pour recevoir un organe d'actionnement (166, 166′) d'un jeu de batteries,
le boîtier comprenant un réceptacle (20), destiné à recevoir, mettre en contact et supporter le jeu de batteries, le réceptacle comportant des parois latérales (36) s'achevant en un fond (38), en partie inférieure du réceptacle et le fond (38) entourant la paroi (56) et les ouvertures (60, 62, 58)
et l'insertion de l'organe d'actionnement (166, 166′) à travers l'ouverture (58) permettant aux broches de borne (158, 160) du jeu de batteries (14, 16, 18) d'être insérées par les ouvertures à borne (60, 62), pour venir en contact avec les lames de borne (90).

2. Un chargeur de batterie selon la revendication 1, caractérisé en ce que le fond de réceptacle (38) comprend un piédestal d'assemblage de bornes (50) espacé des parois latérales (36) du réceptacle (20), de manière à ce qu'un espace analogue à un fossé entoure le piédestal d'assemblage de bornes (50), comprenant une paroi supérieure (56) sensiblement plane contenant les ouvertures (60, 62).

3. Un chargeur de batterie selon la revendication 1, caractérisé en ce que l'insertion de l'organe d'actionnement produit le déplacement d'un écran permettant aux broches de borne de venir en contact avec les lames de borne.

4. Un chargeur de batterie selon la revendication 1, caractérisé en ce que l'insertion de l'organe d'actionnement (166) déplace les lames de borne (90) pour les mettre en contact avec les broches de borne (158, 160).

5. Un chargeur de batterie selon la revendication 4, caractérisé en ce qu'il comprend des moyens de came (94), susceptibles d'être mis en contact par ledit organe d'actionnement (166, 166′) et réagissant à cette mise en contact, pour produire la mise en contact desdites lames de borne (90) et desdites broches de borne (158, 160; 248, 250).

6. Un chargeur de batterie selon la revendication 5, caractérisé en ce que ledit moyen de came (94) comprend deux bras (92) en porte-à-faux, à l'intérieur dudit assemblage de bornes de chargeur (88) et chaque bras (92) ayant une extrémité libre (98) et une came (94) adjacente à ladite extrémité libre (98), lesdites cames (94) étant tournées les unes vers les autres et se chevauchant en une ligne centrale commune lorsque ledit organe d'actionnement (166, 166′) n'est pas inséré en position intermédiaire.

7. Un jeu de batteries pour utilisation avec un chargeur de batterie (12) selon la revendication 1, caractérisé en ce que ledit jeu de batteries comprend un bloc de bornes (22, 22a) comprenant une base (128, 252) portant une paire de broches de borne (158, 160; 248, 250) espacées les unes des autres, la base (128, 252) contenant un organe d'actionnement comprenant un organe isolant (166, 166′) allongé s'étendant entre les broches de borne (158, 160; 248, 250), l'organe d'actionnement (166, 166′) et les broches de borne (158, 160; 248, 250) étant sensiblement parallèles et s'étendant dans une première direction lorsque ledit jeu de batteries (14, 16, 18) est inséré dans le chargeur de batterie (12).

8. Un jeu de batteries selon la revendication 7, caractérisé en ce que l'organe d'actionnement (166, 166′) s'étend au-delà des broches de borne (158, 160; 248, 250) dans la première direction.

9. Un jeu de batteries selon la revendication 7 ou 8, caractérisé en ce que les broches de borne (158, 160; 248, 250) et l'organe isolant (166, 166′) allongé sont entourés par une enveloppe (142), ladite enveloppe (142) s'étendant au-delà des broches de borne (158, 160; 248, 250) dans la première direction, et l'organe d'actionnement (166, 166′) faisant pratiquement la largeur de l'enveloppe (142) entre les broches de borne (158, 160; 248, 250), de manière que chaque broche de borne (158, 160; 248, 250) soit pratiquement isolée de tout contact extérieur ou de court-circuit, produit par inadvertance.

10. Un jeu de batteries selon la revendication 9, pour utilisation avec un chargeur de batterie selon la revendication 2, caractérisé en ce que, lorsque le jeu de batteries (14, 16, 18) est inséré dans le réceptacle (20) de l'assemblage de chargeur de batterie (12), ladite enveloppe (142, 174) entre dans l'espace en forme de fossé du réceptacle (20) et chevauche axialement le piédestal d'assemblage de bornes (50).
